# EUROPEAN PATENT SPECIFICATION

(11) **EP 3 258 179 B1**
(45) Date of publication and mention of the grant of the patent: **30.01.2019**
(21) Application number: 16174150.9
(22) Date of filing: 13.06.2016
(51) Int. Cl.: F24F 11/30, F24F 110/10, F24F 110/20, F24F 3/14, F24F 12/00, F24F 5/00

(54) **HEAT PUMP SYSTEM**
WÄRMEPUMPENSYSTEM
SYSTÈME DE POMPE À CHALEUR

(43) Date of publication of application: 20.12.2017
(73) Proprietor: Daikin Europe N.V., 8400 Oostende (BE); Daikin Industries, Ltd., Osaka 530-8323 (JP)
(72) Inventor: ASPESLAGH, Bart, 9800 Deinze (BE)
(74) Representative: Hoffmann Eitle

(56) References cited:
- EP-A1- 1 795 825
- CN-B- 102 384 539
- US-A- 3 102 399

## Description

### Technical Field

The present invention relates to a heat pump system for conditioning the air of a space inside a building. The heat pump system comprises in particular a heat pump circuit having a heat source heat exchanger, a main expansion mechanism, an indoor heat exchanger and a compressor fluidly connected to each other, a radiant panel loop and a dehumidifying heat exchanger.

### Prior art

From the prior art, a heat pump system comprising a heat pump circuit, a cooling circuit, a radiant panel loop, such as underfloor cooling, fluidly connected to the cooling circuit, and a dehumidifying heat exchanger is known. EP 1 795 825 A1, for example, discloses a heat exchanger for dehumidification, wherein the heat exchange element is supplied with a refrigerant below the dew point of the air to be dehumidified.

The drawback of underfloor cooling (and of a radiant panel loop in general) is that no dehumidification is performed so that discomfort is caused, when the relative humidity is high. More specifically, a high relative humidity is sensed as uncomfortable by the people in the room. Further, condensation occurs on a cooled floor, so that the floor gets wet and slippery.

### Description of the invention

Hence, the object forming the basis of the present invention is to increase the comfort for people in a space inside a building in which a heat pump system for conditioning the air of the space inside the building is provided quickly and with simple means.

This object is solved by the heat pump system according to the present invention having the features of claim 1, namely a heat pump system comprising a heat pump circuit having a heat source heat exchanger, a main extension mechanism, an indoor heat exchanger and a compressor fluidly connected to each other, a cooling circuit fluidly connected to the indoor heat exchanger, a radiant panel loop fluidly connected to the cooling circuit and positioned for heat transfer with air in the space, a ventilation system having an outside inlet fluidly connected with the outside of the building and an inside outlet fluidly communicated with the space for supplying air from the outside of the building to the space, a dehumidifying heat exchanger disposed upstream of the inside outlet and configured to be passed by the outside air before being supplied to the space, the dehumidifying heat exchanger being fluidly connected to the cooling circuit, a valve mechanism disposed in the cooling circuit for controlling the flow of fluid in the cooling circuit from the indoor unit heat exchanger to the radiant panel loop and to the dehumidifying heat exchanger, a measurement system configured to at least measure the humidity in the space, and a control configured to control the valve mechanism during cooling operation on the basis of the measured humidity to perform a dehumidifying operation in which the valve mechanism is controlled to supply fluid to the dehumidifying heat exchanger and not to supply fluid to the radiant panel loop, if the measured humidity exceeds a predetermined humidity threshold.

The invention is based upon the idea of controlling the valve mechanism to supply fluid to the dehumidifying heat exchanger and not to the radiant panel loop, if humidity increases, such that the cooling circuit is used for dehumidifying the outside air to a large extend to obtain a lower humidity of the air supplied to the space so that the humidity of the air inside the space is reduced. More particular, fresh air from the outside of the building or the space is dehumidified and introduced into the space, whereby the dehumidified and, therefore, relatively dry air mixes with the relatively humid air inside the space so that the total humidity of the air inside the space is reduced. At the same time, no fluid of the cooling circuit is supplied to the radiant panel loop, which means that cooling via the radiant panel loop is stopped. In particular, the fluid of the cooling circuit is supplied to the dehumidifying heat exchanger instead of to the radiant panel loop during the dehumidifying operation.

Because a relatively low set point of the fluid to be supplied to the dehumidifying heat exchanger is required in order to enable dehumidification of the outside air (more particularly a temperature below the dew point of the outside air), supplying fluid to the radiant panel loop could increase the risk of condensation water being formed on the surface of the radiant panel, such as the floor. According to the invention, the air inside the space may be dehumidified without the risk of condensation water being formed on the radiant panel.

To put it differently, this control leads to the effect that active ventilation by means of the ventilation system and the dehumidifying heat exchanger is used for both cooling and dehumidifying. Since cooling via the radiant panel loop is stopped, the outside air can more efficiently be cooled and dehumidified. In particular, the fluid of the cooling circuit can be set to a temperature below the dew point of the outside air, so that water vapor contained in the outside air is reduced by means of the dehumidifying heat exchanger, for example, with a cooling coil. Hence, the dehumidified air is introduced in the space inside the building and mixes with the air already present in the space, so that the overall humidity of the mixed air is decreased. Further, the air supplied to the space is cold and can take over the cooling of the space inside the building from the stopped cooling by means of the radiant panel loop.

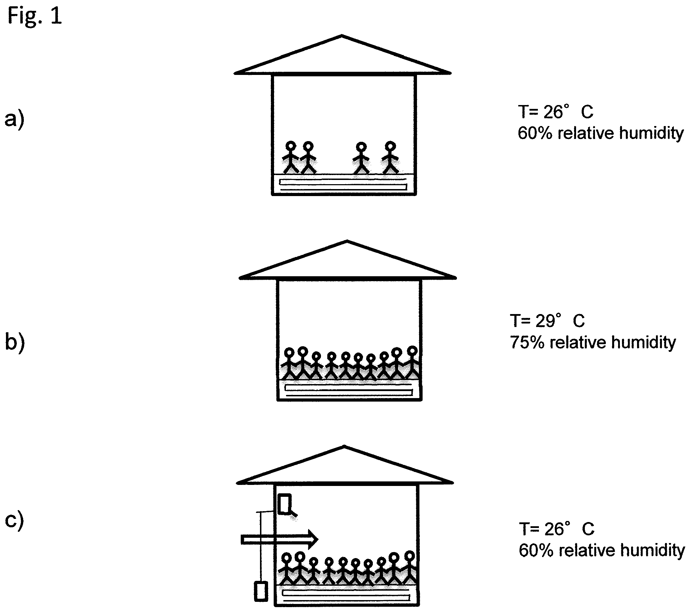

Figure 1 illustrates the effect achieved by means of the heat pump system according to the present invention. Figure 1 depicts three situations inside a space of a building, wherein the outside air has a constant temperature of 30°C and a constant relative humidity of 50%. In Figure 1a, underfloor cooling is running, and the people inside the building feel comfortable, since the temperature inside is 26°C and the relative humidity is 60%. Figure 1b depicts what happens, when many people enter the room, wherein underfloor cooling is switched on: the temperature as well as the relative humidity increase. Such high relative humidity, however, decreases the comfort, and people start to feel uncomfortable.

In Figure 1c, the present invention is applied to improve the situation of Figure 1b, and underfloor cooling is switched off and so-called "active" cooling by means of the dehumidifying heat exchanger is switched on. In other words, in the situation of Figure 1c, the control according to the present invention is provided and the valve mechanism is controlled to supply fluid to the dehumidifying heat exchanger, so that outside air, before being supplied to the space inside the building, is dehumidified and cooled, wherein the fluid is no longer supplied to the underfloor cooling, but the underfloor cooling is stopped. Such control leads to the effect that the temperature as well as the relative humidity inside the building are reduced and the comfort for people inside the building is enhanced. Hence, by means of the present invention, a comfortable situation can be reached, even when many people are inside a room.

The cooling circuit may also be a heating circuit of an air-conditioner capable of both heating and cooling.

The radiant panel loop may be an underfloor cooling/heating loop, a wall cooling/heating loop or a ceiling cooling/heating loop.

The dehumidifying heat exchanger is also for cooling or heating the outside air, and not only for dehumidifying the outside air.

The fluid supplied to the dehumidifying heat exchanger and the radiant panel loop, i.e. the fluid in the cooling circuit, may be water, but also other fluids are conceivable.

The ventilation system may be switched on, even if the humidity does not exceed a predetermined humidity threshold, i.e. when the normal operation is performed. In particular, the dehumidifying heat exchanger is switched off during normal operation, and only switched on during the dehumidifying operation. It is, however, also conceivable that fluid is supplied not only to the radiant panel loop, but also to the dehumidifying heat exchanger during the normal operation, to cool the air supplied to the space inside.

According to a preferred embodiment, the control is configured to set a flow temperature of the fluid in the cooling circuit and downstream of the indoor heat exchanger to a first flow temperature and performs normal operation in which the valve mechanism is controlled by the control to supply fluid to the radiant panel loop, and to a second flow temperature lower than the first flow temperature when the valve mechanism is controlled by the control to perform the dehumidifying operation, wherein the second flow temperature is a temperature at or below the dew point of the outside air. Such control has the advantage that the outside air can more efficiently be dehumidified and that a comfortable situation can be reached faster, since the lower the temperature and relative humidity of the air supplied to the space are, the faster a comfortable temperature and relative humidity can be reached in the room.

Further, the heat pump may comprise a fan for passing the air from the outside of the building via the dehumidifying heat exchanger into the space, wherein the control is configured to vary the speed of the fan if the valve mechanism is controlled to perform the dehumidifying operation as compared to normal operation in which the valve mechanism is controlled by the control to supply fluid to the radiant panel loop. Hence, if the amount of ventilation is adjusted depending of the humidity and the temperature in the room to be conditioned, the desired humidity and temperature can more quickly be reached. Thus, a comfortable feeling for the people inside the room can more quickly be ensured.

Preferably, the speed of the fan is increased if the valve mechanism is controlled to perform the dehumidifying operation as compared to normal operation. Since, during dehumidifying operation, fluid is not supplied to the radiant panel loop, the cooling capacity is reduced. Hence, by increasing the ventilation amount, this decrease in capacity can be compensated, so that a comfortable condition with low temperature and low humidity can be achieved quickly and with simple means.

In particular, the measurement system may be configured to measure the temperature in the space, and the control may be configured to vary the speed of the fan depending on the measured temperature. If the temperature in addition to the humidity in the space is measured, it can be ensured that the temperature of the fluid for the cooling circuit is below the dew point of the air in the space to be conditioned, so that the desired humidity and temperature can more quickly be achieved.

Preferably, the measurement system is configured to measure the humidity in the space, and the control is configured to vary the speed of the fan depending on the measured humidity.

In a preferred embodiment of a heat pump system according to the present invention, the ventilation system is a heat reclaim ventilation system (HRV), further comprising an outside outlet fluidly communicated with the outside of the building and a space inlet fluidly communicated with the space for exhausting air in the space to the outside of the building, wherein a first line connects the outside inlet and the inside outlet, and a second line connects the space inlet and the outside outlet, further comprising a ventilation system heat exchanger for exchanging heat between air in the second line and air in the first line. The heat reclaim ventilation system provides the advantage that air flowing from the space inlet to the outside outlet via the second line can be used for cooling air flowing from the outside inlet to the inside outlet, to reduce the energy needed to cool the air to be supplied to the space via the inside outlet.

Preferably, a bypass line is provided in the heat pump system, more specifically in the heat reclaim ventilation system, wherein the bypass line is connected at opposite ends to the first line and bypasses the ventilation system heat exchanger. By means of the bypass line, a free cooling operation is possible.

Preferably, the control further comprises a timer, the timer being started to measure a time period when the control switches the valve mechanism to perform the dehumidifying operation, and the dehumidifying operation is terminated when the time period reaches a predetermined threshold. According to this embodiment, cooling by means of the radiant panel loop is only stopped for a predetermined time period during which the dehumidifying operation is performed. After the predetermined time period, the air inside the building is sufficiently dehumidified, i.e. the relative humidity is sufficiently low, so that cooling by the radiant panel loop can be re-started, i.e. the dehumidifying operation is terminated and normal operation is re-started.

In a preferred embodiment, the control is configured to control the valve mechanism to perform normal operation, if the measured humidity is equal to or below the predetermined humidity threshold or another predetermined humidity threshold during the dehumidification operation. Hence, after the dehumidifying heat exchanger has sufficiently reduced the relative humidity in the air inside the space to be conditioned, fluid is supplied to the radiant panel loop and cooling is performed on the basis of the radiant panel loop again.

Preferably, the valve mechanism is a 3-way valve disposed in an inflow line connecting an outlet of the indoor heat exchanger and an inlet of the radiant panel loop and connected to a return line connecting an outlet of the radiant panel loop and an inlet of the indoor heat exchanger, wherein a first dehumidification line connects to the inflow line upstream of the 3-way valve and to an inlet of the dehumidifying heat exchanger, and a second dehumidification line connects to an outlet of the dehumidifying heat exchanger and the return line downstream of the 3-way valve. An advantage of this embodiment is that the dehumidifying heat exchanger and the radiant panel loop can easily be connected alternatively to the cooling circuit.

### Brief description of the Figures

Figure 1 illustrates the advantage achieved by the present invention in comparison with prior art systems.
Figure 2 shows the heat pump system according to the present invention.

### Detailed description of a preferred embodiment of the invention

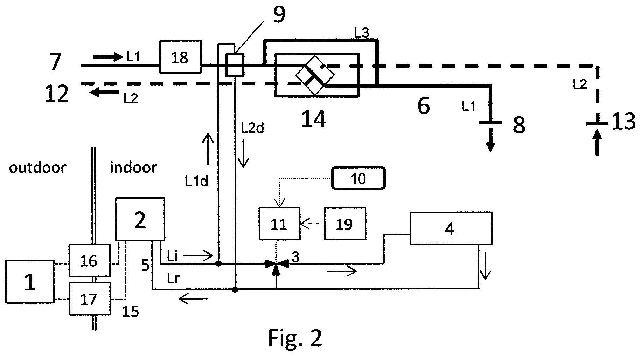

In the following, further advantages and features of the present invention are described in connection with Figure 2.

Figure 2 shows a heat pump system according to the present invention, for conditioning the air of the space inside the building, i.e. the indoor space. The heat pump system comprises a heat pump circuit 15 having a heat source heat exchanger 1, a main expansion mechanism 16, an indoor heat exchanger 2 and a compressor 17 fluidly connected to each other, so as to form the heat pump circuit 15. The heat source heat exchanger 1 is provided in the outdoor space, and the indoor heat exchanger 2 is provided in the indoor space, i.e. inside the space to be conditioned. The heat pump circuit 15 is indicated by the dashed lines in Figure 2.

A cooling circuit 5 fluidly connected to the indoor heat exchanger 2 is provided and indicated with thin lines in Figure 2. A radiant panel loop 4 is fluidly connected to the cooling circuit 5 and positioned for heat transfer with air in the indoor space.

Further, a ventilation system 6 having an outside inlet 7 fluidly communicated with the outside of the building, i.e. the outdoor space, and an inside outlet 8 fluidly communicated with the space for supplying air from the outside of the building to the space, i.e. the indoor space, is provided. The ventilation system 6 is indicated with thick lines in Figure 2.

A dehumidifying heat exchanger 9 is disposed upstream of the inside outlet 8 and configured to be passed by the outside air before being supplied to the space, i.e. the indoor space, wherein the dehumidifying heat exchanger 9 is fluidly connected to the cooling circuit 5. Thus, fluid in the cooling circuit 5 can flow from the indoor heat exchanger 2 to the radiant panel loop 4 or to the dehumidifying heat exchanger 9.

A valve mechanism 3 is disposed in the cooling circuit 5 for controlling the flow of fluid in the cooling circuit. More specifically, the valve mechanism 3 is a 3-way valve disposed in an inflow line Li connecting an outlet of the indoor heat exchanger 2 and an inlet of the radiant panel loop 4 and connected to a return line Lr connecting an outlet of the radiant panel loop 4 and an inlet of the indoor heat exchanger 2, wherein a first dehumidification line Lid connects to the inflow line Li upstream of the 3-way valve 3 and to an inlet of the dehumidification exchanger 9, and a second dehumidification line L2d connects to an outlet of the dehumidifying heat exchanger 9 and the return line Lr downstream of the 3-way valve 3.

In other words, the cooling circuit 5 comprises the inflow line Li, the first dehumidification line L1d, the second dehumidification line L2d, and the return line Lr. By means of the 3-way valve 3, the fluid is supplied to either the dehumidifying heat exchanger 9 or to the radiant panel loop 4.

A measurement system 10 configured to at least measure the humidity in the space, in particular a humidity sensor, is provided. Additionally, the measurement system 10 is configured to measure the temperature in the space, wherein the measurement system 10 also comprises a temperature sensor, for example.

According to the present invention, the control 11 is configured to control the valve mechanism 3 during cooling operation on the basis of the measured humidity to perform a dehumidifying operation in which the valve mechanism 3 is controlled to supply fluid to the dehumidifying heat exchanger 9 and not to supply fluid to the radiant panel loop 4, if the measured humidity exceeds a predetermined humidity threshold. For example, the predetermined humidity threshold can be a relative humidity of 60, 70 or 80%.

The control 11 is further configured to set a flow temperature of the fluid in the cooling circuit and downstream of the indoor heat exchanger to the first flow temperature T1 when performing normal operation in which the valve mechanism is controlled by the control to supply fluid to the radiant panel loop and to a second flow temperature T2 lower than the first flow temperature T1, when the valve mechanism 3 is controlled by the control 11 to perform the dehumidifying operation, wherein the second flow temperature T2 is a temperature at or below the dew point of the outside air. Preferably, the first flow temperature T1 is set to 15 to 20°C, and the second flow temperature T2 is below 10°C, preferably to less than 7°C.

The embodiment shown in Figure 2 further comprises a fan 18 for passing the air from the outside of the building, i.e. from outdoor, via the dehumidifying heat exchanger 9 into the indoor space. The control 11 is configured to vary the speed of the fan 18 if the valve mechanism 3 is controlled to perform the dehumidifying operation as compared to normal operation in which the valve mechanism 3 is controlled by the control 11 to supply fluid to the radiant panel loop 4. In particular, the speed of the fan 18 is increased, if the valve mechanism 3 is controlled to perform the dehumidifying operation as compared to normal operation. The fan 18 may be arranged in the first line L1 connecting the outside inlet 7 and the inside outlet 8. Preferably, the control 11 is configured to vary the speed of the fan 18 depending on the measured temperature.Alternatively or additionally, the control can also vary the speed of the fan depending on the humidity. If the humidity is high, the fan speed is increased so as to reach the desired humidity.

In a preferred embodiment, the ventilation system 6 comprises a heat reclaim ventilation system HRV, further comprising an outside outlet 12 fluidly communicated with the outside of the building, i.e. the outdoor space, and a space inlet 13 fluidly communicated with the space for exhausting air in the space to the outside of the building, wherein the first line L1 connects the outside inlet 7 and the inside outlet 8. A second line L2 connects the space inlet 13 and the outside outlet 12. Further, a ventilation system heat exchanger 14 for exchanging heat between air in the second line L2 and air in the first line L1 is provided.

A bypass line L3 connected at opposite ends to the first line L1 and for bypassing the ventilation system heat exchanger 14 is shown in the embodiment of Figure 2. In particular, the bypass line L3 is used during the dehumidifying operation and ventilation during cooling operation. By means of the bypass line, a free cooling operation is possible, without impact from the ventilation system heat exchanger 14.

A timer 19 may be provided in the heat pump system, wherein the timer is started to measure a time period when the control 11 switches the valve mechanism 3 to perform the dehumidifying operation, and the dehumidifying operation is terminated when the time period reaches a predetermined threshold. For example, the predetermined threshold may be five minutes, thirty minutes or one hour.

Alternatively or additionally, the control 11 is configured to control the valve mechanism 3 to perform normal operation, when the measured humidity is equal to or below the predetermined humidity threshold or another predetermined humidity threshold during dehumidification operation. For example, if the predetermined humidity threshold is 60%, the dehumidifying operation is alternated, when the measured humidity is at or below the predetermined humidity threshold.

## Claims

1. Heat pump system for conditioning the air of a space inside a building, comprising
a heat pump circuit (15) having a heat source heat exchanger (1), a main expansion mechanism (16), an indoor heat exchanger (2) and a compressor (17) fluidly connected to each other,
a cooling circuit (5) fluidly connected to the indoor heat exchanger (2),
a radiant panel loop (4) fluidly connected to the cooling circuit (5) and positioned for heat transfer with air in the space,
a ventilation system (6) having an outside inlet (7) fluidly communicated with the outside of the building and an inside outlet (8) fluidly communicated with the space for suppling air from the outside of the building to the space,
a dehumidifying heat exchanger (9) disposed upstream of the inside outlet (8) and configured to be passed by the outside air before being supplied to the space, the dehumidifying heat exchanger (9) being fluidly connected to the cooling circuit (5),
a valve mechanism (3) disposed in the cooling circuit (5)
a measurement system (10) configured to at least measure the humidity in the space, and
a control (11),
**characterized in that**
the valve mechanism (3) is for controlling the flow of fluid in the cooling circuit (5) from the indoor unit heat exchanger (2) to the radiant panel loop (4) and to the dehumidifying heat exchanger (9), and
the control (11) is configured to control the valve mechanism (3) during cooling operation on the basis of the measured humidity to perform a dehumidifying operation in which the valve mechanism (3) is controlled to supply fluid to the dehumidifying heat exchanger (9) and to not supply fluid to the radiant panel loop (4), if the measured humidity exceeds a predetermined humidity threshold.

2. Heat pump system according to claim 1, wherein the control (11) is configured to set a flow temperature of the fluid in the cooling circuit (5) and downstream of the indoor heat exchanger (2) to a first flow temperature (T1) when performing normal operation in which the valve mechanism (3) is controlled by the control (11) to supply fluid to the radiant panel loop (4) and to a second flow temperature (T2) lower than the first flow temperature (T1), when the valve mechanism (3) is controlled by the control (11) to perform the dehumidifying operation, wherein the second flow temperature (T2) is a temperature at or below the dew point of the outside air.

3. Heat pump system according to claim 1 or 2, further comprising a fan (18) for passing the air from the outside of the building via the dehumidifying heat exchanger (9) into the space, wherein the control (11) is configured to vary the speed of the fan (18) if the valve mechanism (3) is controlled to perform the dehumidifying operation as compared to normal operation in which the valve mechanism (3) is controlled by the control (11) to supply fluid to the radiant panel loop (4).

4. Heat pump system according to claim 3, wherein the speed of the fan (18) is increased if the valve mechanism (3) is controlled to perform the dehumidifying operation as compared to normal operation.

5. Heat pump system according to claim 3 or 4, wherein the measurement system (10) is further configured to measure the temperature in the space, and the control (11) is configured to vary the speed of the fan (18) depending on the measured temperature.

6. Heat pump system according to claim 3 or 4, wherein the measurement system (10) is further configured to measure the humidity in the space, and the control (11) is configured to vary the speed of the fan (18) depending on the measured humidity.

7. Heat pump system according to any one of the preceding claims, wherein the ventilation system (6) is a heat reclaim ventilation system further comprising an outside outlet (12) fluidly communicated with the outside of the building and a space inlet (13) fluidly communicated with the space for exhausting air in the space to the outside of the building, wherein a first line (L1) connects the outside inlet (7) and the inside outlet (8) and a second line (L2) connects the space inlet (13) and the outside outlet (12), further comprising a ventilation system heat exchanger (14) for exchanging heat between air in the second line (L2) and air in the first line (L1).

8. Heat pump system according to claim 7, further comprising a bypass line (L3) connected at opposite ends to the first line (L1) and bypassing the ventilation system heat exchanger (14).

9. Heat pump system according to any one of the preceding claims, wherein the control (11) further comprises a timer (19), the timer being started to measure a time period when the control (11) switches the valve mechanism (3) to perform the dehumidifying operation, and the dehumidifying operation is terminated when the time period reaches a predetermined threshold.

10. Heat pump system according to any one of claims 1 to 8, wherein the control (11) is configured to control the valve mechanism (3) to perform normal operation, when the measured humidity is equal to or below the predetermined humidity threshold or another predetermined humidity threshold during dehumidification operation.

11. Heat pump system according to any one of the preceding claims, wherein the valve mechanism (3) is a 3-way valve disposed in an inflow line (Li) connecting an outlet of the indoor heat exchanger (2) and an inlet of the radiant panel loop (4) and connected to a return line (Lr) connecting an outlet of the radiant panel loop (4) and an inlet of the indoor heat exchanger (2), wherein a first dehumidification line (L1d) connects to the inflow line (Li) upstream of the 3-way valve (3) and to an inlet of the dehumidifying heat exchanger (9), and a second dehumidification line (L2d) connects to an outlet of the dehumidifying heat exchanger (9) and the return line (Lr) downstream of the 3-way valve (3).

## Patentansprüche

1. Wärmepumpensystem zur Klimatisierung der Luft eines Raumes in einem Gebäude, umfassend
einen Wärmepumpenkreislauf (15), der einen Wärmequellen-Wärmetauscher (1), einen Hauptexpansionsmechanismus (16), einen Innenraum-Wärmetauscher (2) und einen Kompressor (17) aufweist, die miteinander strömungstechnisch verbunden sind,
einen Kühlkreislauf (5), der mit dem Innenraum-Wärmetauscher (2) strömungstechnisch verbunden ist,
eine Strahlungsplattenschleife (4), die mit dem Kühlkreislauf (5) strömungstechnisch verbunden und für Wärmeübertragung mit Luft in dem Raum positioniert ist,
ein Lüftungssystem (6), das einen äußeren Einlass (7), der mit der Außenseite des Gebäudes strömungstechnisch verbunden ist, und einen inneren Auslass (8) aufweist, der mit dem Raum strömungstechnisch verbunden ist, um dem Raum Luft von der Außenseite des Gebäudes zuzuführen,
einen Entfeuchtungs-Wärmetauscher (9), der stromaufwärts des inneren Auslasses (8) angeordnet ist und konfiguriert ist, um von der Außenluft durchströmt zu werden, bevor sie dem Raum zugeführt wird, wobei der Entfeuchtungs-Wärmetauscher (9) mit dem Kühlkreislauf (5) strömungstechnisch verbunden ist,
einen Ventilmechanismus (3), der im Kühlkreislauf (5) angeordnet ist,
ein Messsystem (10), das konfiguriert ist, um mindestens die Feuchtigkeit in dem Raum zu messen, und
eine Steuerung (11),
**dadurch gekennzeichnet, dass**
der Ventilmechanismus (3) zum Steuern des Fluidstroms im Kühlkreislauf (5) vom Innenraumeinheit-Wärmetauscher (2) zur Strahlungsplattenschleife (4) und zum Entfeuchtungs-Wärmetauscher (9) dient, und
die Steuerung (11) konfiguriert ist, um den Ventilmechanismus (3) während eines Kühlbetriebs auf Basis der gemessenen Feuchtigkeit zu steuern, um einen Entfeuchtungsbetrieb durchzuführen, bei dem der Ventilmechanismus (3) gesteuert wird, um dem Entfeuchtungs-Wärmetauscher (9) Fluid zuzuführen und der Strahlungsplattenschleife (4) kein Fluid zuzuführen, wenn die gemessene Feuchtigkeit einen vorbestimmten Feuchtigkeitsschwellenwert überschreitet.

2. Wärmepumpensystem nach Anspruch 1, wobei die Steuerung (11) konfiguriert ist, um eine Stromtemperatur des Fluids im Kühlkreislauf (5) und stromabwärts des Innenraum-Wärmetauschers (2) auf eine erste Stromtemperatur (T1) einzustellen, wenn ein Normalbetrieb durchgeführt wird, bei dem der Ventilmechanismus (3) von der Steuerung (11) gesteuert wird, um der Strahlungsplattenschleife (4) und einer zweiten Stromtemperatur (T2) Fluid zuzuführen, die niedriger ist als die erste Stromtemperatur (T1), wenn der Ventilmechanismus (3) von der Steuerung (11) gesteuert wird, um den Entfeuchtungsbetrieb durchzuführen, wobei die zweite Stromtemperatur (T2) eine Temperatur bei oder unter dem Taupunkt der Außenluft ist.

3. Wärmepumpensystem nach Anspruch 1 oder 2, weiter umfassend einen Lüfter (18) zum Leiten der Luft von der Außenseite des Gebäudes über den Entfeuchtungs-Wärmetauscher (9) in den Raum, wobei die Steuerung (11) konfiguriert ist, um die Drehzahl des Lüfters (18) zu variieren, wenn der Ventilmechanismus (3) gesteuert wird, um den Entfeuchtungsbetrieb gegenüber dem Normalbetrieb durchzuführen, bei dem der Ventilmechanismus (3) durch die Steuerung (11) gesteuert wird, um der Strahlungsplattenschleife (4) Fluid zuzuführen.

4. Wärmepumpensystem nach Anspruch 3, wobei die Drehzahl des Lüfters (18) erhöht wird, wenn der Ventilmechanismus (3) gesteuert wird, um den Entfeuchtungsbetrieb gegenüber dem Normalbetrieb durchzuführen.

5. Wärmepumpensystem nach Anspruch 3 oder 4, wobei das Messsystem (10) weiter konfiguriert ist, um die Temperatur im Raum zu messen, und die Steuerung (11) konfiguriert ist, um die Drehzahl des Lüfters (18) abhängig von der gemessenen Temperatur zu variieren.

6. Wärmepumpensystem nach Anspruch 3 oder 4, wobei das Messsystem (10) weiter konfiguriert ist, um die Feuchtigkeit im Raum zu messen, und die Steuerung (11) konfiguriert ist, um die Drehzahl des Lüfters (18) abhängig von der gemessenen Feuchtigkeit zu variieren.

7. Wärmepumpensystem nach einem der vorstehenden Ansprüche, wobei das Lüftungssystem (6) ein Wärmerückgewinnungs-Lüftungssystem ist, das weiter einen äußeren Auslass (12), der mit der Außenseite des Gebäudes strömungstechnisch verbunden ist, und einen Raumeinlass (13) umfasst, der mit dem Raum strömungstechnisch verbunden ist, um Luft in dem Raum zur Außenseite des Gebäudes auszustoßen, wobei eine erste Leitung (L1) den äußeren Einlass (7) und den inneren Auslass (8) verbindet und eine zweite Leitung (L2) den Raumeinlass (13) und den äußeren Auslass (12) verbindet, weiter umfassend einen Lüftungssystem-Wärmetauscher (14) zum Austausch von Wärme zwischen Luft in der zweiten Leitung (L2) und Luft in der ersten Leitung (L1).

8. Wärmepumpensystem nach Anspruch 7, weiter umfassend eine Bypassleitung (L3), die an gegenüberliegenden Enden der ersten Leitung (L1) angeschlossen ist und den Lüftungssystem-Wärmetauscher (14) umgeht.

9. Wärmepumpensystem nach einem der vorstehenden Ansprüche, wobei die Steuerung (11) weiter einen Zeitschalter (19) umfasst, wobei der Zeitschalter gestartet wird, um eine Zeitspanne zu messen, wenn die Steuerung (11) den Ventilmechanismus (3) schaltet, um den Entfeuchtungsbetrieb durchzuführen, und der Entfeuchtungsbetrieb beendet wird, wenn die Zeitspanne einen vorbestimmten Schwellenwert erreicht.

10. Wärmepumpensystem nach einem der Ansprüche 1 bis 8, wobei die Steuerung (11) konfiguriert ist, um den Ventilmechanismus (3) zu steuern, um einen Normalbetrieb durchzuführen, wenn die gemessene Feuchtigkeit gleich oder unter dem vorbestimmten Feuchtigkeitsschwellenwert oder einem anderen vorbestimmten Feuchtigkeitsschwellenwert während des Entfeuchtungsbetriebs ist.

11. Wärmepumpensystem nach einem der vorhergehenden Ansprüche, wobei der Ventilmechanismus (3) ein Dreiwegeventil ist, das in einer Zulaufleitung (Li) angeordnet ist, die einen Auslass des Innenraum-Wärmetauschers (2) und einen Einlass der Strahlungsplattenschleife (4) verbindet und mit einer Rücklaufleitung (Lr) verbunden ist, die einen Auslass der Strahlungsplattenschleife (4) und einen Einlass des Innenraum-Wärmetauschers (2) verbindet, wobei eine erste Entfeuchtungsleitung (L1d) mit der Zulaufleitung (Li) stromaufwärts des Dreiwegeventils (3) und mit einem Einlass des Entfeuchtungs-Wärmetauschers (9) verbunden ist, und wobei eine zweite Entfeuchtungsleitung (L2d) mit einem Auslass des Entfeuchtungs-Wärmetauschers (9) und der Rücklaufleitung (Lr) stromabwärts des Dreiwegeventils (3) verbunden ist.

## Revendications

1. Système de pompe à chaleur pour climatiser l'air d'un espace à l'intérieur d'un bâtiment, comprenant
un circuit de pompe à chaleur (15) comportant un échangeur de chaleur à source de chaleur (1), un mécanisme d'expansion principal (16), un échangeur de chaleur intérieur (2) et un compresseur (17) raccordés fluidiquement entre eux,
un circuit de refroidissement (5) raccordé fluidiquement à l'échangeur de chaleur intérieur (2),
une boucle de panneau radiant (4) raccordée fluidiquement au circuit de refroidissement (5) et positionnée pour un transfert de chaleur avec l'air dans l'espace,
un système de ventilation (6) comportant une entrée extérieure (7) communiquant fluidiquement avec l'extérieur du bâtiment et une sortie intérieure (8) communiquant fluidiquement avec l'espace pour apporter de l'air depuis l'extérieur du bâtiment jusqu'à l'espace,
un échangeur de chaleur de déshumidification (9) disposé en amont de la sortie intérieure (8) et configuré pour être passé par l'air extérieur avant d'être apporté à l'espace, l'échangeur de chaleur de déshumidification (9) étant raccordé fluidiquement au circuit de refroidissement (5),
un mécanisme de vanne (3) disposé dans le circuit de refroidissement (5),
un système de mesure (10) configuré pour au moins mesurer l'humidité dans l'espace, et
une commande (11),
**caractérisé en ce que**
le mécanisme de vanne (3) sert à commander l'écoulement de fluide dans le circuit de refroidissement (5) depuis l'échangeur de chaleur d'unité intérieure (2) vers la boucle de panneau radiant (4) et vers l'échangeur de chaleur de déshumidification (9), et
la commande (11) est configurée pour commander le mécanisme de vanne (3) durant l'opération de refroidissement sur la base de l'humidité mesurée pour effectuer une opération de déshumidification dans laquelle le mécanisme de vanne (3) est commandé pour apporter du fluide à l'échangeur de chaleur de déshumidification (9) et pour ne pas apporter de fluide à la boucle de panneau radiant (4), si l'humidité mesurée dépasse un seuil d'humidité prédéterminé.

2. Système de pompe à chaleur selon la revendication 1, dans lequel la commande (11) est configurée pour régler une température d'écoulement du fluide dans le circuit de refroidissement (5) et en aval de l'échangeur de chaleur intérieur (2) sur une première température d'écoulement (T1) lors de la réalisation d'une opération normale dans laquelle le mécanisme de vanne (3) est commandé par la commande (11) pour apporter du fluide à la boucle de panneau radiant (4) et sur une deuxième température d'écoulement (T2) inférieure à la première température d'écoulement (T1), quand le mécanisme de vanne (3) est commandé par la commande (11) pour réaliser l'opération de déshumidification, dans lequel la deuxième température d'écoulement (T2) est une température au niveau ou sous le point de rosée de l'air extérieur.

3. Système de pompe à chaleur selon la revendication 1 ou 2, comprenant en outre un ventilateur (18) pour faire passer l'air depuis l'extérieur du bâtiment via l'échangeur de chaleur de déshumidification (9) dans l'espace, dans lequel la commande (11) est configurée pour faire varier la vitesse du ventilateur (18) si le mécanisme de vanne (3) est commandé pour réaliser l'opération de déshumidification par rapport à une opération normale dans laquelle le mécanisme de vanne (3) est commandé par la commande (11) pour apporter du fluide à la boucle de panneau radiant (4).

4. Système de pompe à chaleur selon la revendication 3, dans lequel la vitesse du ventilateur (18) est augmentée si le mécanisme de vanne (3) est commandé pour réaliser l'opération de déshumidification par rapport à une opération normale.

5. Système de pompe à chaleur selon la revendication 3 ou 4, dans lequel le système de mesure (10) est en outre configuré pour mesurer la température dans l'espace, et la commande (11) est configurée pour faire varier la vitesse du ventilateur (18) en fonction de la température mesurée.

6. Système de pompe à chaleur selon la revendication 3 ou 4, dans lequel le système de mesure (10) est en outre configuré pour mesurer l'humidité dans l'espace, et la commande (11) est configurée pour faire varier la vitesse du ventilateur (18) en fonction de l'humidité mesurée.

7. Système de pompe à chaleur selon l'une quelconque des revendications précédentes, dans lequel le système de ventilation (6) est un système de ventilation à récupération de chaleur comprenant en outre une sortie extérieure (12) communiquant fluidiquement avec l'extérieur du bâtiment et une entrée d'espace (13) communiquant fluidiquement avec l'espace pour évacuer l'air dans l'espace vers l'extérieur du bâtiment, dans lequel une première conduite (L1) raccorde l'entrée extérieure (7) et la sortie intérieure (8) et une deuxième conduite (L2) raccorde l'entrée d'espace (13) et la sortie extérieure (12), comprenant en outre un échangeur de chaleur de système de ventilation (14) pour effectuer un échange de chaleur entre l'air dans la deuxième conduite (L2) et l'air dans la première conduite (L1).

8. Système de pompe à chaleur selon la revendication 7, comprenant en outre une conduite de dérivation (L3) raccordée au niveau d'extrémités opposées à la première conduite (L1) et contournant l'échangeur de chaleur de système de ventilation (14).

9. Système de pompe à chaleur selon l'une quelconque des revendications précédentes, dans lequel la commande (11) comprend en outre un chronomètre (19), le chronomètre démarrant pour mesurer une période de temps quand la commande (11) commute le mécanisme de vanne (3) pour réaliser l'opération de déshumidification, et l'opération de déshumidification se termine quand la période de temps atteint un seuil prédéterminé.

10. Système de pompe à chaleur selon l'une quelconque des revendications 1 à 8, dans lequel la commande (11) est configurée pour commander le mécanisme de vanne (3) pour réaliser une opération normale, quand l'humidité mesurée est égale ou inférieure au seuil d'humidité prédéterminé ou à un autre seuil d'humidité prédéterminé durant l'opération de déshumidification.

11. Système de pompe à chaleur selon l'une quelconque des revendications précédentes, dans lequel le mécanisme de vanne (3) est une vanne à trois voies disposée dans une conduite d'écoulement entrant (Li) raccordant une sortie de l'échangeur de chaleur intérieur (2) et une entrée de la boucle de panneau radiant (4) et raccordée à une conduite de retour (Lr) raccordant une sortie de la boucle de panneau radiant (4) et une entrée de l'échangeur de chaleur intérieur (2), dans lequel une première conduite de déshumidification (L1d) se raccorde à la conduite d'écoulement entrant (Li) en amont de la vanne à trois voies (3) et à une entrée de l'échangeur de chaleur de déshumidification (9), et une deuxième conduite de déshumidification (L2d) se raccorde à une sortie de l'échangeur de chaleur de déshumidification (9) et à la conduite de retour (Lr) en aval de la vanne à trois voies (3).
